# FASCICULE DE BREVET EUROPEEN

(11) **EP 3 153 337 B1**
(45) Date de publication et mention de la délivrance du brevet: **14.12.2022**
(21) Numéro de dépôt: 16187602.4
(22) Date de dépôt: 07.09.2016
(51) Int. Cl.: B60H 1/32, B61D 27/00, B60H 1/00

(54) **DISPOSITIF PERFECTIONNÉ DE CLIMATISATION, NOTAMMENT POUR UN COMPARTIMENT DE VÉHICULE FERROVIAIRE**
PERFEKTIONIERTE KLIMAANLAGENVORRICHTUNG, INSBESONDERE FÜR EIN SCHIENENFAHRZEUGABTEIL
IMPROVED AIR-CONDITIONING DEVICE, IN PARTICULAR FOR A RAILWAY VEHICLE COMPARTMENT

(30) Priorité: 21.09.2015 FR 1558873
(43) Date de publication de la demande: 12.04.2017
(73) Titulaire: ALSTOM Transport Technologies, 93400 Saint-Ouen (FR)
(72) Inventeur: ABOU-EID, Rami, 75014 Paris (FR); HEUZE, Alexandre, 93400 Saint Ouen (FR); GARNICHE, François, 59159 Marcoing (FR); CHEVALLIER, Philippe, 92500 Rueil Malmaison (FR)
(74) Mandataire: Lavoix

(56) Documents cités:
- EP-A1- 1 329 344
- EP-A1- 2 894 419
- US-A1- 2009 205 346

## Description

La présente invention concerne un dispositif de climatisation d'au moins un compartiment, notamment d'au moins un compartiment de véhicule ferroviaire.

On connait déjà, dans l'état de la technique, un dispositif de climatisation comprenant un circuit de pompe à chaleur, dans lequel circule un fluide caloporteur. Le circuit comprend classiquement un premier échangeur de chaleur avec de l'air extérieur, un compresseur, un dispositif détendeur et un second échangeur de chaleur avec de l'air du compartiment.

Des exemples de dispositifs de climatisation sont décrits dans les documents US 2009/205346 ou EP 2 894 419.

De manière classique, un tel dispositif de climatisation est propre à refroidir l'air du compartiment. A cet effet, le fluide caloporteur suit le cycle suivant :
- le fluide frigorigène sort du compresseur et circule jusqu'au premier échangeur de chaleur, logé à l'extérieur ou dans le compartiment, afin d'y céder de la chaleur à l'air extérieur ;
- le fluide frigorigène ainsi refroidi et en état liquide circule ensuite jusqu'au dispositif détendeur, où il est encore refroidi par diminution de sa pression ;
- le fluide frigorigène circule ensuite jusqu'au second échangeur de chaleur logé dans le compartiment, où il prélève de la chaleur à l'air du compartiment ; et
- le fluide frigorigène circule enfin jusqu'au compresseur, où un nouveau cycle peu commencer.

Un véhicule ferroviaire, notamment de type métro, circule au moins en partie dans des espaces confinés, tels que des tunnels. Ledit air extérieur, auquel le fluide frigorigène cède de la chaleur, est donc l'air de ces espaces confinés.

Le dispositif de climatisation a donc pour effet d'augmenter la température dans les tunnels de métro et dans les stations de métro, ce qui n'est pas souhaitable, car le dispositif de climatisation est utilisé dans des périodes chaudes de l'année.

L'invention a notamment pour but de remédier à cet inconvénient, en proposant un dispositif de climatisation perfectionné permettant d'éviter de céder de la chaleur dans les tunnels.

A cet effet, l'invention a notamment pour objet un dispositif de climatisation d'un compartiment, notamment de véhicule ferroviaire, du type comprenant un premier circuit de pompe à chaleur, dans lequel circule un fluide frigorigène, le premier circuit comprenant un premier échangeur de chaleur avec de l'air extérieur, un compresseur et un dispositif détendeur, caractérisé en ce qu'il comporte :
- un second circuit, dans lequel circule un fluide caloporteur, comprenant un second échangeur de chaleur avec de l'air du compartiment,
- un échangeur de chaleur commun, par lequel passent le premier circuit et le second circuit, propre à échanger de la chaleur entre le fluide frigorigène et le fluide caloporteur, et
- un réservoir de stockage thermique, connecté au premier circuit en parallèle de l'échangeur de chaleur commun, et connecté au second circuit en parallèle de l'échangeur de chaleur commun.

Un dispositif de climatisation selon l'invention peut comporter en outre l'une ou plusieurs des caractéristiques suivantes, prises seules ou selon toutes combinaisons techniquement envisageables.
- Le premier circuit comporte au moins une première vanne pour la connexion sélective du premier échangeur de chaleur avec l'échangeur de chaleur commun, le réservoir de stockage ou aucun parmi l'échangeur de chaleur commun et le réservoir de stockage.
- Le second circuit comporte au moins une seconde vanne pour la connexion sélective de l'échangeur de chaleur commun ou du réservoir de stockage au second échangeur de chaleur.
- Lequel le premier circuit comporte : une première branche, connectée au premier échangeur de chaleur, une deuxième branche, s'étendant entre le premier échangeur de chaleur et le dispositif détendeur, une troisième branche, s'étendant entre le dispositif détendeur et l'échangeur de chaleur commun, une quatrième branche, connectée à l'échangeur de chaleur commun, une branche de compresseur, sur laquelle est agencée le compresseur, et s'étendant entre une partie d'entrée et une partie de sortie, et un dispositif d'inversion, propre à connecter alternativement ladite partie d'entrée à la première branche et ladite partie de sortie à la quatrième branche, ou ladite partie d'entrée à la quatrième branche et ladite partie de sortie à la première branche.
- Le dispositif détendeur comporte un premier et un second détendeurs, chacun porté par une première et une seconde branche de détendeur respective, tels que : le premier détendeur, présente une entrée connectée à ladite deuxième branche, et une sortie connectée à ladite troisième branche, le second détendeur présente une entrée connectée à ladite troisième branche, et une sortie connectée à ladite deuxième branche, et chaque branche de détendeur comporte un clapet anti-retour, agencé en série avec le premier ou second détendeur correspondant, et orienté dans le même sens que ce premier ou second détendeur correspondant.
- Le second circuit comporte un réservoir de fluide caloporteur.

L'invention concerne également un procédé de refroidissement d'au moins un compartiment, au moyen d'un dispositif de climatisation selon l'une quelconque des revendications précédentes, le dispositif de climatisation comportant :
- au moins une première vanne, dans le premier circuit, pour la connexion sélective du premier échangeur de chaleur avec l'échangeur de chaleur commun, le réservoir de stockage ou aucun parmi l'échangeur de chaleur commun et le réservoir de stockage, et
- au moins une seconde vanne, dans le second circuit, pour la connexion sélective de l'échangeur de chaleur commun ou du réservoir de stockage avec le second échangeur de chaleur,
caractérisé en ce qu'il comporte une étape au cours de laquelle le dispositif de climatisation prend une configuration d'utilisation de froid stocké, dans laquelle :
- chaque première vanne est fermée pour déconnecter le premier échangeur de chaleur de l'échangeur de chaleur commun et du réservoir de stockage, et
- l'au moins une seconde vanne connecte le second échangeur de chaleur du second circuit au réservoir de stockage.

Un dispositif de refroidissement selon l'invention peut comporter en outre l'une ou plusieurs des caractéristiques suivantes, prises seules ou selon toutes combinaisons techniquement envisageables.
- Le procédé de refroidissement comporte une étape au cours de laquelle le dispositif de climatisation prend une configuration nominale de refroidissement, dans laquelle : l'au moins une première vanne connecte le premier échangeur de chaleur à l'échangeur de chaleur commun, et l'au moins une seconde vanne connecte le second échangeur de chaleur à l'échangeur de chaleur commun.
- Le procédé de refroidissement comporte une étape au cours de laquelle le dispositif de climatisation prend une configuration de stockage de froid, dans laquelle : l'au moins une première vanne connecte le premier échangeur de chaleur au réservoir de stockage, et l'au moins une seconde vanne connecte le second échangeur de chaleur à l'échangeur de chaleur commun.
- Lorsque le véhicule ferroviaire circule hors d'un espace confiné, le dispositif de climatisation prend la configuration de stockage de froid ou la configuration nominale de refroidissement, et lorsque le véhicule ferroviaire circule dans un espace confiné, le dispositif de climatisation prend la configuration d'utilisation de froid stocké.

L'invention sera mieux comprise à la lecture de la description qui va suivre, donnée uniquement à titre d'exemple et faite en se référant aux figures annexées, parmi lesquelles :
- la figure 1 représente schématiquement un dispositif de climatisation selon un premier exemple de mode de réalisation de l'invention ;
- la figure 2 représente schématiquement un dispositif de climatisation selon un deuxième exemple de mode de réalisation de l'invention.

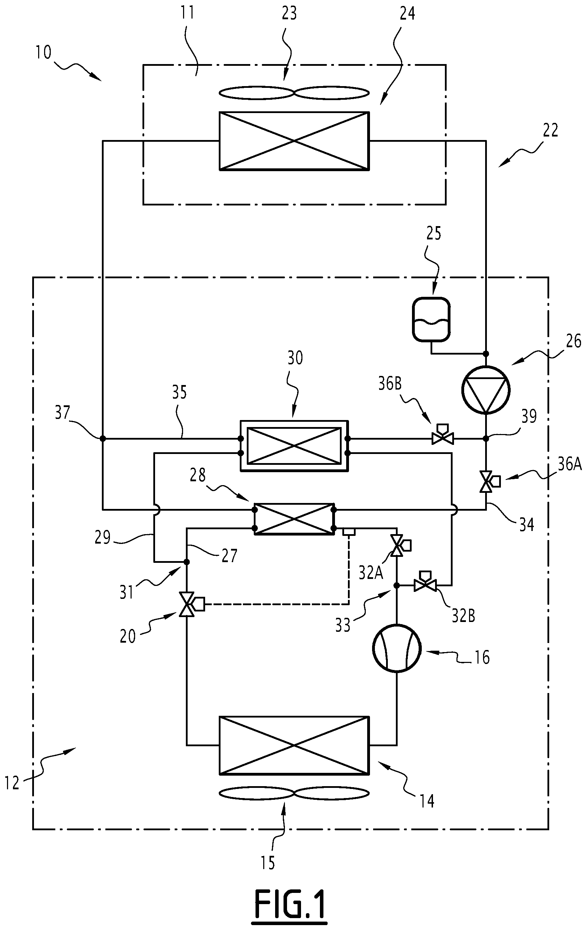

On a représenté, sur la figure 1, un dispositif 10 de climatisation d'un compartiment 11, notamment d'un compartiment de véhicule ferroviaire, par exemple de type métro. On notera que plusieurs dispositifs 10 de climatisation identiques peuvent être agencés en parallèle, dans le compartiment 11 et/ou dans des compartiments adjacents.

Dans la présente description, le terme « compartiment » recouvre tout espace clos pouvant être climatisé, par exemple un compartiment voyageurs de véhicule ferroviaire, une cabine de pilotage d'un véhicule ferroviaire, un habitacle de véhicule automobile, un compartiment de véhicule aéronautique ou maritime, ou encore une pièce d'un bâtiment.

Le dispositif de climatisation 10 comporte un premier circuit 12 de pompe à chaleur, réalisant aussi une fonction de climatisation suivant les modes opérationnels, dans lequel circule un fluide frigorigène.

Le premier circuit 12 comporte au moins un premier échangeur 14 de chaleur avec de l'air, agencé à l'extérieur du compartiment. Ainsi, le premier échangeur 14 permet d'échanger de la chaleur entre le fluide frigorigène et de l'air extérieur. Avantageusement, le premier échangeur 14 est équipé d'un premier dispositif de ventilation 15, propre à générer un flux d'air passant par ce premier échangeur de chaleur 14. Ce dispositif de ventilation favorise l'échange de chaleur entre l'air et l'échangeur de chaleur 14.

Le premier circuit 12 comporte également, de manière classique, un compresseur 16 et un dispositif détendeur 20, de part et d'autre du premier échangeur 14.

Le dispositif de climatisation 10 comporte par ailleurs au moins un second circuit 22, dans lequel circule un fluide caloporteur. Le second circuit 22 comprend un second échangeur 24 de chaleur avec de l'air, agencé dans le compartiment 11. Ainsi, le second échangeur 24 permet d'échanger de la chaleur entre le fluide caloporteur et l'air du compartiment 11. Avantageusement, le second échangeur de chaleur 24 est équipé d'un second dispositif de ventilation 23, propre à générer un flux d'air passant par ce second échangeur de chaleur 24, pour favoriser l'échange de chaleur entre l'air et ce second échangeur de chaleur 24.

Le second circuit 22 comporte par ailleurs une pompe 26 de circulation de fluide dans le second circuit 22.

Avantageusement, le second circuit 22 comporte un réservoir 25 de fluide caloporteur, permettant d'absorber les variations de volume du fluide caloporteur, notamment dues aux variations de température.

Le dispositif de climatisation 10 comporte par ailleurs un échangeur de chaleur 28 commun aux premier 12 et second 22 circuits, par lequel passent le premier circuit 12 et le second circuit 22. Cet échangeur de chaleur commun 28 permet d'échanger de la chaleur entre le fluide frigorigène et le fluide caloporteur.

Le dispositif de climatisation 10 comporte également un réservoir de stockage thermique 30, connecté au premier circuit 12 en parallèle de l'échangeur de chaleur commun 28, et connecté au second circuit 22 en parallèle de l'échangeur de chaleur commun 28.

Le réservoir de stockage thermique 30 comporte par exemple une enceinte remplie d'un fluide ou d'un matériau à changement de phase, notamment un liquide ou liquide qui se solidifie en se refroidissant, de stockage thermique, un premier élément creux d'échange thermique, logé dans l'enceinte et communiquant avec le premier circuit 12, et un second élément creux d'échange thermique, logé dans l'enceinte, communiquant avec le second circuit 22. Le réservoir de stockage 30 permet un échange de chaleur entre le liquide de stockage et le fluide frigorigène d'une part, et entre le liquide de stockage et le fluide caloporteur d'autre part.

Le premier circuit 12 comporte une première branche 27 d'échangeur commun, passant par l'échangeur commun 28, et une première branche 29 de réservoir, passant par le réservoir thermique 30. La première branche d'échangeur commun 27 et la première branche de réservoir 29 sont parallèles, si bien qu'elles s'étendent toutes deux entre un premier embranchement 31 et un second embranchement 33.

Le premier circuit 12 comporte au moins une première vanne 32A, 32B, notamment au moins une première électrovanne, pour autoriser ou interdire la circulation de fluide frigorigène au travers de l'échangeur de chaleur commun 28 et du réservoir de stockage 30. Ainsi, cette au moins une première vanne 32A, 32B permet la connexion sélective du premier échangeur 14 avec l'échangeur de chaleur commun 28, avec le réservoir de stockage 30, avec les deux parmi l'échangeur de chaleur commun 28 et le réservoir de stockage 30 ou avec aucun parmi l'échangeur de chaleur commun 28 et le réservoir de stockage 30.

Dans l'exemple représenté, le premier circuit 12 comporte deux premières vannes 32A, 32B, l'une agencée sur la première branche d'échangeur commun 27, et l'autre agencée sur la première branche de réservoir 29.

En variante, l'un parmi les premier 31 et second 33 embranchements pourrait être formé par une vanne à trois voies, dont une première voie est connectée à la première branche 27 d'échangeur commun, une seconde voie est connectée à la première branche de réservoir 29, et une troisième voie est connectée à une branche reliée au compresseur 16 ou au dispositif détendeur 20.

De même, le second circuit 22 comporte une seconde branche 34 d'échangeur commun, passant par l'échangeur commun 28, et une seconde branche 35 de réservoir, passant par le réservoir thermique 30. La seconde branche d'échangeur commun 34 et la seconde branche de réservoir 35 sont parallèles, si bien qu'elles s'étendent toutes deux entre un troisième embranchement 37 et un quatrième embranchement 39.

Le second circuit 22 comporte au moins une seconde vanne 36A, 36B, notamment au moins une seconde électrovanne, pour autoriser ou interdire la circulation de fluide caloporteur au travers de l'échangeur de chaleur commun 28 et du réservoir de stockage 30. Ainsi, cette au moins une seconde vanne 36A, 36B permet la connexion sélective du second échangeur 24 avec l'échangeur de chaleur commun 28, avec le réservoir de stockage 30, avec les deux parmi l'échangeur de chaleur commun 28 et le réservoir de stockage 30 ou avec aucun parmi l'échangeur de chaleur commun 28 et le réservoir de stockage 30.

Dans l'exemple représenté, le second circuit 12 comporte deux secondes vannes 36A, 36B, l'une agencée sur la seconde branche d'échangeur commun 34, et l'autre agencée sur la seconde branche de réservoir 35.

En variante, l'un parmi les troisième 37 et quatrième 39 embranchements pourrait être formé par une vanne à trois voies, dont une première voie est connectée à la seconde branche 34 d'échangeur commun, une seconde voie est connectée à la seconde branche de réservoir 35, et une troisième voie est connectée à une branche reliée au second échangeur de chaleur 24 ou à la pompe 26.

Le fonctionnement du dispositif de climatisation 10 va maintenant être décrit ci-dessous. Le dispositif de climatisation 10 selon le premier mode de réalisation de l'invention est destiné à refroidir l'air du compartiment 11.

Ce dispositif de climatisation 10 peut prendre au moins trois configurations de fonctionnement, à savoir une première configuration nominale de refroidissement, une seconde configuration de stockage de froid et une troisième configuration d'utilisation du froid stocké.

Dans la première configuration nominale de refroidissement, le fluide frigorigène, sortant du compresseur 16, circule jusqu'au premier échangeur de chaleur 14, où il cède de la chaleur à l'air extérieur.

Le fluide frigorigène ainsi refroidi circule ensuite jusqu'au dispositif détendeur 20, où il est encore refroidi lorsque sa pression diminue dans ce dispositif détendeur 20.

Le fluide frigorigène circule ensuite jusqu'au premier embranchement 31.

Dans cette première configuration nominale de refroidissement, la première vanne 32A de la première branche d'échangeur commun 27 est ouverte, et la première vanne 32B de la première branche de réservoir 29 est fermée. Le fluide frigorigène circule alors à travers l'échangeur de chaleur commun 28, où il prélève de la chaleur au fluide caloporteur.

Le fluide frigorigène circule enfin jusqu'au compresseur 16, où un nouveau cycle peut commencer.

Dans le second circuit 22, la seconde vanne 36A de la seconde branche d'échangeur commun 34 est ouverte, et la seconde vanne 36B de la seconde branche de réservoir 35 est fermée. Le fluide caloporteur circule donc, depuis la pompe 26, au travers de l'échangeur de chaleur commun 28, où il cède de la chaleur au fluide frigorigène.

Le fluide caloporteur circule ensuite jusqu'au second échangeur de chaleur 24, où il prélève de la chaleur à l'air du compartiment 11, dont la température est ainsi réduite.

Cette première configuration correspond sensiblement à une configuration de refroidissement classique, où le dispositif de climatisation 10 prélève de la chaleur dans le compartiment 11 pour céder cette chaleur à l'extérieur.

Dans la seconde configuration de stockage de froid dans le réservoir de stockage 30, la première vanne 32A de la première branche d'échangeur commun 27 est fermée, et la première vanne 32B de la première branche de réservoir 29 est ouverte, si bien que le fluide frigorigène circule à travers le réservoir de stockage 30, où il prélève de la chaleur au liquide de stockage. Ainsi, le fluide frigorigène prélève de la chaleur au liquide de stockage, pour la céder à l'air extérieur dans le premier échangeur de chaleur 14, de la même manière que précédemment.

Dans cette seconde configuration de stockage de froid, la seconde vanne 36A de la seconde branche 34 d'échangeur commun est ouverte, et la seconde vanne 34B de la seconde branche de réservoir 29 est fermée.

Ainsi, pendant que le premier circuit 12 stocke du froid dans le réservoir de stockage 30, le second circuit 22 continue de prélever de la chaleur à l'air du compartiment 11 par le second échangeur 24, pour la céder au fluide frigorigène résiduel dans l'échangeur commun 28.

En variante, dans une autre configuration, les secondes vannes 36A, 36B sont toutes deux fermées pendant que le premier circuit 12 stocke du froid dans le réservoir de stockage 30.

Le froid stocké peut ensuite être utilisé dans la troisième configuration d'utilisation de froid stocké.

Dans cette troisième configuration d'utilisation de froid stocké, chaque première vanne 32A, 32B est fermée pour déconnecter l'échangeur de chaleur commun 28 et le réservoir de stockage 30 du premier échangeur de chaleur 14. Le premier circuit 12 est ainsi désactivé, et ne cède donc pas de chaleur à l'extérieur. Avantageusement, le dispositif de ventilation 15 est également désactivé.

En revanche, dans le second circuit 22, la seconde vanne 36A de la seconde branche d'échangeur commun 34 est fermée, et la seconde vanne 36B de la seconde branche de réservoir 35 est ouverte. Le fluide caloporteur circule donc, depuis la pompe 26, au travers du réservoir de stockage 30, où il cède de la chaleur au liquide de stockage. Ainsi, le fluide caloporteur prélève de la chaleur à l'air du compartiment 11 dans le second échangeur de chaleur 24, puis cède de la chaleur au liquide de stockage logé dans le réservoir de stockage 30.

On notera que, lorsque le dispositif de climatisation équipe un compartiment de véhicule ferroviaire, lorsque le véhicule ferroviaire circule dans un espace confiné, notamment un tunnel, le dispositif de climatisation 10 prend la troisième configuration d'utilisation de froid stocké, dans laquelle le premier circuit 12 est désactivé, afin de ne pas rejeter de chaleur dans l'espace confiné.

En revanche, lorsque le véhicule ferroviaire circule en dehors d'un espace confiné, le dispositif de climatisation 10 prend la seconde configuration de stockage de froid ou la première configuration nominale de refroidissement.

Par exemple, le dispositif de climatisation 10 prend alternativement la première et la seconde configuration, tant que le véhicule ferroviaire circule en dehors d'un espace confiné.

Le passage d'une configuration à une autre peut être effectué automatiquement, par exemple en détectant les espaces confinés à l'aide de moyens classiques (par exemple au moyen d'un système de guidage par satellite ou équivalent). En variante, le passage d'une configuration à une autre peut être effectué manuellement par un opérateur, par exemple le conducteur du véhicule ferroviaire.

On notera que les configurations décrites ci-dessus ne sont pas limitatives, et qu'on peut prévoir d'autres configurations de fonctionnement.

Par exemple, les premières vannes 32A, 32B peuvent, dans une autre configuration de stockage de froid, êtres toutes deux ouvertes, pour prélever de la chaleur dans le réservoir 30 tout en prélevant de la chaleur dans l'échangeur commun 28. En revanche, la seconde vanne 36A de la seconde branche d'échangeur commun 34 est ouverte, et la seconde vanne 36B de la seconde branche de réservoir 35 est fermée. Le dispositif de climatisation 10 peut ainsi refroidir l'air du compartiment 11, tout en stockant du froid dans le réservoir de stockage 30.

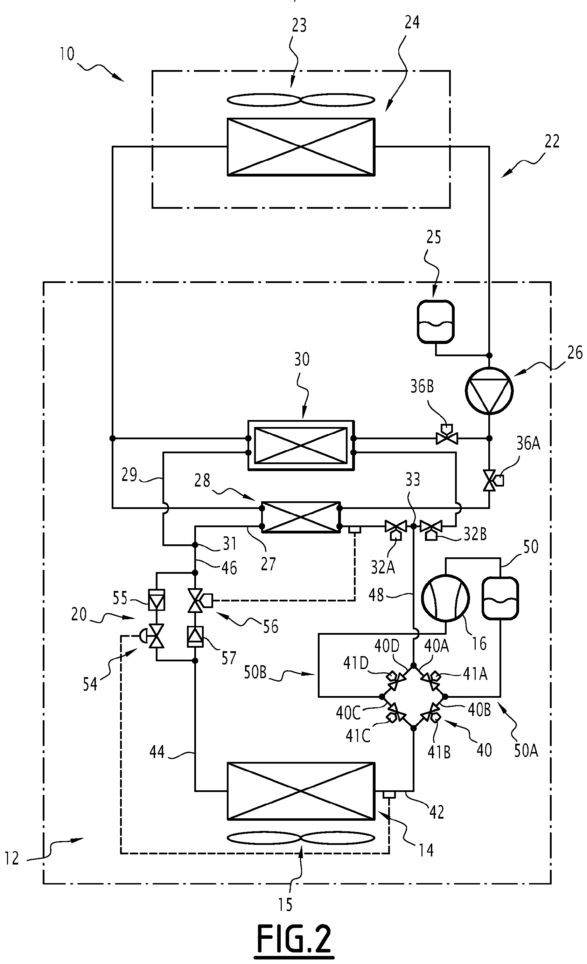

On a représenté sur la figure 2 un dispositif de climatisation 10 selon un deuxième exemple de mode de réalisation de l'invention. Sur cette figure, les éléments analogues à ceux de la figure précédente sont désignés par des références identiques.

Conformément à ce deuxième mode de réalisation, le second circuit 22 est identique à celui du premier mode de réalisation. En revanche, le premier circuit 12 diffère de celui du premier mode de réalisation en ce qu'il est réversible.

A cet effet, le premier circuit 12 comporte un dispositif d'inversion 40, propre à connecter la sortie du compresseur 16 soit au premier échangeur 14 soit à l'échangeur de chaleur commun 28.

Plus particulièrement, le premier circuit 12 comporte :
- une première branche 42, s'étendant entre le dispositif d'inversion 40 et le premier échangeur de chaleur 14,
- une deuxième branche 44, s'étendant entre le premier échangeur de chaleur 14 et le dispositif détendeur 20,
- une troisième branche 46, s'étendant entre le dispositif détendeur 20 et le premier embranchement 31,
- une quatrième branche 48, s'étendant entre le second embranchement 33 et le dispositif d'inversion 40, et
- une branche de compresseur 50 sur laquelle est agencée le compresseur 16, s'étendant entre une partie d'entrée 50A et une partie de sortie 50A.

Le dispositif d'inversion 40 est propre à connecter alternativement la partie d'entrée 50A à la première branche 42 et la partie de sortie 50B à la quatrième branche 48, où la partie d'entrée 50A à la quatrième branche 48 et la partie de sortie 50B à la première branche 42.

Le dispositif d'inversion 40 comporte par exemple :
- une première partie 40A, comprenant une première vanne d'inversion 41A (par exemple une électrovanne), s'étendant entre la quatrième branche 48 et la partie d'entrée 50A,
- une seconde partie 40B, comprenant une seconde vanne d'inversion 41B (par exemple une électrovanne), s'étendant entre la partie d'entrée 50A et la première branche 42,
- une troisième partie 40C, comprenant une troisième vanne d'inversion 41C (par exemple une électrovanne), s'étendant entre la première branche 42 et la partie de sortie 50B, et
- une quatrième partie 40D, comprenant une quatrième vanne d'inversion 41D (par exemple une électrovanne), s'étendant entre la partie de sortie 50B et la quatrième branche 48.

Par ailleurs, le dispositif détendeur 20 comporte un premier 54 et un second 56 détendeur, chacun porté par une branche de détendeur respective, telle que le premier détendeur 54 présente une entrée connectée à la deuxième branche 44 et une sortie connectée à la troisième branche 46, et le second détendeur 56 présente une entrée connectée à la troisième branche 46 et une sortie connectée à la deuxième branche 44. Chaque branche de détendeur comporte un clapet anti-retour 55, 57 agencé en série avec le premier 54 ou second 56 détendeurs correspondants, et orienté dans le même sens que le premier 54 ou second 56 détendeurs correspondants.

Ainsi, en fonction du sens de circulation du fluide frigorigène imposé par le compresseur 16, ce fluide frigorigène passe par l'une ou l'autre des première et seconde branches de détendeur.

Le dispositif de climatisation 10 selon le deuxième exemple de mode de réalisation peut être utilisé pour refroidir l'air du compartiment 11 ou pour le réchauffer.

Ainsi, en fonction du sens de circulation du fluide frigorigène, le dispositif de climatisation 10 est dans un mode de refroidissement ou dans un mode de chauffage.

Dans le mode de refroidissement, le dispositif d'inversion 40 connecte la partie de sortie 50B à la première branche 42, et la partie d'entrée à la quatrième branche 48. En d'autres termes, les première 41A et troisième 41C vannes d'inversion sont ouvertes, et les secondes 41B et quatrième 41D vannes d'inversion sont fermées.

Dans ce mode de refroidissement, le fonctionnement du dispositif de climatisation 10 selon le second mode de réalisation est identique à celui du dispositif de climatisation selon le premier mode de réalisation décrit précédemment.

Le dispositif de climatisation 10 en mode de refroidissement peut donc notamment prendre les première, seconde et troisième configurations décrites précédemment.

Dans le mode de chauffage, le dispositif d'inversion 40 connecte la partie de sortie 50B à la quatrième branche 48 et la partie d'entrée 50A à la première branche. En d'autres termes, les première 41A et troisième 41C vannes d'inversion sont fermées, et les secondes 41B et quatrième 41D vannes d'inversion sont ouvertes.

Le dispositif de climatisation 10 peut alors prendre au moins trois configurations de fonctionnement supplémentaires, à savoir une quatrième configuration nominale de chauffage, une cinquième configuration de stockage de chaleur et une troisième configuration d'utilisation de la chaleur stockée.

Dans la quatrième configuration nominale de chauffage, le fluide frigorigène, sortant du compresseur 16, circule jusqu'au second embranchement 33.

Dans cette quatrième configuration nominale de chauffage, la première vanne 32A de la première branche d'échangeur commun 27 est ouverte, et la première vanne 32B de la première branche de réservoir 29 est fermée. Le fluide frigorigène circule alors à travers l'échangeur de chaleur commun 28, où il cède de la chaleur au fluide caloporteur.

Le fluide frigorigène ainsi refroidi circule ensuite jusqu'au dispositif détendeur 20, où il est encore refroidi lorsque sa pression diminue dans ce dispositif détendeur 20.

Le fluide frigorigène circule ensuite jusqu'au premier échangeur de chaleur 14, où il prélève de la chaleur à l'air extérieur.

Le fluide frigorigène circule enfin jusqu'au compresseur 16, où un nouveau cycle peut commencer.

Dans le second circuit 22, la seconde vanne 36A de la seconde branche d'échangeur commun 34 est ouverte, et la seconde vanne 36B de la seconde branche de réservoir 35 est fermée. Le fluide caloporteur circule donc, depuis la pompe 26, au travers de l'échangeur de chaleur commun 28, où il prélève de la chaleur au fluide frigorigène.

Le fluide caloporteur circule ensuite jusqu'au second échangeur de chaleur 24, où il cède de la chaleur à l'air du compartiment 11, dont la température est ainsi augmentée.

Cette quatrième configuration correspond sensiblement à une configuration de chauffage classique, où le dispositif de climatisation 10 prélève de la chaleur à l'extérieur pour céder cette chaleur dans le compartiment 11.

Dans la cinquième configuration de stockage de chaleur dans le réservoir de stockage 30, la première vanne 32A de la première branche d'échangeur commun 27 est fermée, et la première vanne 32B de la première branche de réservoir 29 est ouverte, si bien que le fluide frigorigène circule à travers le réservoir de stockage 30, où il cède de la chaleur au liquide de stockage. Ainsi, le fluide frigorigène prélève de la chaleur à l'air extérieur, pour la céder au liquide de stockage, de la même manière que précédemment.

Dans cette cinquième configuration de stockage de chaleur, la seconde vanne 36A de la seconde branche 34 d'échangeur commun est ouverte, et la seconde vanne 34B de la seconde branche de réservoir 29 est fermée.

Ainsi, pendant que le premier circuit 12 stocke de la chaleur dans le réservoir de stockage 30, le second circuit 22 continue de prélever de la chaleur résiduelle du fluide frigorigène résiduel dans l'échangeur commun 28, pour la céder à l'air du compartiment 11 par le second échangeur 24.

En variante, dans une autre configuration, les secondes vannes 36A, 36B sont toutes deux fermées pendant que le premier circuit 12 stocke de la chaleur dans le réservoir de stockage 30.

Dans le cas d'un véhicule ferroviaire, la chaleur dissipée lors du freinage ou par les caténaires peut ainsi être récupérée et stockée dans le réservoir de stockage 30, en vue d'une utilisation ultérieure.

En outre, cette cinquième configuration peut être avantageusement utilisée pour refroidir l'air dans un espace confiné, tel qu'un tunnel, dans lequel circule le véhicule ferroviaire. En effet, le premier circuit prélève de la chaleur dans l'air de cet espace confiné, pour la céder au réservoir de stockage.

La chaleur stockée peut ensuite être utilisée dans la sixième configuration d'utilisation de chaleur stockée.

Dans cette sixième configuration d'utilisation de chaleur stockée, chaque première vanne 32A, 32B est fermée pour déconnecter l'échangeur de chaleur commun 28 et le réservoir de stockage 30 du premier échangeur de chaleur 14. Le premier circuit 12 est ainsi désactivé, et ne prélève donc pas de chaleur à l'extérieur. Avantageusement, le dispositif de ventilation 15 est également désactivé.

En revanche, dans le second circuit 22, la seconde vanne 36A de la seconde branche d'échangeur commun 34 est fermée, et la seconde vanne 36B de la seconde branche de réservoir 35 est ouverte. Le fluide caloporteur circule donc, depuis la pompe 26, au travers du réservoir de stockage 30, où il prélève de la chaleur au liquide de stockage, pour la céder ensuite à l'air du compartiment 11 dans le second échangeur de chaleur 24.

On notera que l'invention n'est pas limitée aux modes de réalisation précédemment décrits, mais pourrait présenter diverses variantes sans sortir du cadre des revendications.

Par exemple, le dispositif de climatisation 10 pourrait comporter plusieurs seconds circuits 22, passant tous par l'échangeur de chaleur commun 28 et le réservoir de stockage 30, et comportant chacun un second échangeur de chaleur respectif 24 logé dans un compartiment, notamment dans un même compartiment ou répartis dans différents compartiments.

Par ailleurs, bien que le dispositif de climatisation 10 selon l'invention soit particulièrement adapté à un véhicule ferroviaire, notamment de type métro, il peut être employé dans tout type de compartiment envisageable.

## Revendications

1. Dispositif (10) de climatisation d'un compartiment (11), notamment de véhicule ferroviaire, du type comprenant un premier circuit de pompe à chaleur (12), dans lequel circule un fluide frigorigène, le premier circuit comprenant un premier échangeur (14) de chaleur avec de l'air extérieur, un compresseur (16) et un dispositif détendeur (20), le dispositif de climatisation (10) comportant :
- un second circuit (22), dans lequel circule un fluide caloporteur, comprenant un second échangeur de chaleur (24) avec de l'air du compartiment (11),
- un échangeur de chaleur commun (28), par lequel passent le premier circuit (12) et le second circuit (22), propre à échanger de la chaleur entre le fluide frigorigène et le fluide caloporteur,
**caractérisé en ce qu'**il comprend un réservoir de stockage thermique (30), connecté au premier circuit (12) en parallèle de l'échangeur de chaleur commun (28), et connecté au second circuit (22) en parallèle de l'échangeur de chaleur commun (28).

2. Dispositif de climatisation (10) selon la revendication 1, dans lequel le premier circuit (12) comporte au moins une première vanne (32A, 32B) pour la connexion sélective du premier échangeur de chaleur (14) avec l'échangeur de chaleur commun (28), le réservoir de stockage (30) ou aucun parmi l'échangeur de chaleur commun (28) et le réservoir de stockage (30).

3. Dispositif de climatisation (10) selon la revendication 1 ou 2, dans lequel le second circuit (22) comporte au moins une seconde vanne (36A, 36B) pour la connexion sélective de l'échangeur de chaleur commun (28) ou du réservoir de stockage (30) au second échangeur de chaleur (24).

4. Dispositif de climatisation (10) selon l'une quelconque des revendications précédentes, dans lequel le premier circuit (12) comporte :
- une première branche (42), connectée au premier échangeur de chaleur (14),
- une deuxième branche (44), s'étendant entre le premier échangeur de chaleur (14) et le dispositif détendeur (20),
- une troisième branche (46), s'étendant entre le dispositif détendeur (20) et l'échangeur de chaleur commun (18),
- une quatrième branche (48), connectée à l'échangeur de chaleur commun (18),
- une branche de compresseur (50), sur laquelle est agencée le compresseur (16), et s'étendant entre une partie d'entrée (50A) et une partie de sortie (50B), et
- un dispositif d'inversion (40), propre à connecter alternativement ladite partie d'entrée (50A) à la première branche (42) et ladite partie de sortie (50B) à la quatrième branche (48), ou ladite partie d'entrée (50A) à la quatrième branche (48) et ladite partie de sortie (50B) à la première branche (42).

5. Dispositif de climatisation (10) selon la revendication 4, dans lequel le dispositif détendeur (20) comporte un premier (54) et un second (58) détendeurs, chacun porté par une première et une seconde branche de détendeur respective, tels que :
- le premier détendeur (54), présente une entrée connectée à ladite deuxième branche (44), et une sortie connectée à ladite troisième branche (46),
- le second détendeur (56) présente une entrée connectée à ladite troisième branche (46), et une sortie connectée à ladite deuxième branche (44), et
- chaque branche de détendeur (36, 40) comporte un clapet anti-retour (55, 57), agencé en série avec le premier (54) ou second (56) détendeur correspondant, et orienté dans le même sens que ce premier (54) ou second (56) détendeur correspondant.

6. Dispositif de climatisation (10) selon l'une quelconque des revendications précédentes, dans lequel le second circuit (22) comporte un réservoir (25) de fluide caloporteur.

7. Procédé de refroidissement d'au moins un compartiment (11), au moyen d'un dispositif de climatisation (10) selon l'une quelconque des revendications précédentes, le dispositif de climatisation (10) comportant :
- au moins une première vanne (32A, 32B), dans le premier circuit (12), pour la connexion sélective du premier échangeur de chaleur (14) avec l'échangeur de chaleur commun (28), le réservoir de stockage (30) ou aucun parmi l'échangeur de chaleur commun (28) et le réservoir de stockage (30), et
- au moins une seconde vanne (36A, 36B), dans le second circuit, pour la connexion sélective de l'échangeur de chaleur commun (28) ou du réservoir de stockage (30) avec le second échangeur de chaleur (24),
**caractérisé en ce qu'**il comporte une étape au cours de laquelle le dispositif de climatisation (10) prend une configuration d'utilisation de froid stocké, dans laquelle :
- chaque première vanne (32A, 32B) est fermée pour déconnecter le premier échangeur de chaleur (14) de l'échangeur de chaleur commun (28) et du réservoir de stockage (30), et
- l'au moins une seconde vanne (36A, 36B) connecte le second échangeur de chaleur (24) du second circuit (22) au réservoir de stockage (30).

8. Procédé de refroidissement selon la revendication 7, comportant une étape au cours de laquelle le dispositif de climatisation (10) prend une configuration nominale de refroidissement, dans laquelle :
- l'au moins une première vanne (32A, 32B) connecte le premier échangeur de chaleur (14) à l'échangeur de chaleur commun (28), et
- l'au moins une seconde vanne (36A, 36B) connecte le second échangeur de chaleur (24) à l'échangeur de chaleur commun (28).

9. Procédé de refroidissement selon la revendication 7 ou 8, comportant une étape au cours de laquelle le dispositif de climatisation (10) prend une configuration de stockage de froid, dans laquelle :
- l'au moins une première vanne (32A, 32B) connecte le premier échangeur de chaleur (14) au réservoir de stockage (30), et
- l'au moins une seconde vanne (36A, 36B) connecte le second échangeur de chaleur (24) à l'échangeur de chaleur commun (28).

10. Procédé de refroidissement d'un compartiment (11) de véhicule ferroviaire, selon les revendications 8 et 9 prises en combinaison, dans lequel :
- lorsque le véhicule ferroviaire circule hors d'un espace confiné, le dispositif de climatisation (10) prend la configuration de stockage de froid ou la configuration nominale de refroidissement, et
- lorsque le véhicule ferroviaire circule dans un espace confiné, le dispositif de climatisation (10) prend la configuration d'utilisation de froid stocké.

## Patentansprüche

1. Vorrichtung (10) zum Klimatisieren eines Abteils (11), insbesondere eines Schienenfahrzeugs, von einem Typ, umfassend einen ersten Wärmepumpenkreislauf (12) umfasst, in dem ein Kältemittel zirkuliert, der erste Kreislauf umfassend einen ersten Wärmetauscher (14) mit Außenluft, einen Kompressor (16) und eine Expansionsvorrichtung (20), die Klimatisierungsvorrichtung (10) umfassend:
- einen zweiten Kreislauf (22), in dem ein Wärmeträgerfluid zirkuliert, umfassend einen zweiten Wärmetauscher (24) mit Luft des Abteils (11),
- einen gemeinsamen Wärmetauscher (28), durch den der erste Kreislauf (12) und der zweite Kreislauf (22) verlaufen, der geeignet ist, um Wärme zwischen dem Kältemittel und dem Wärmeträger auszutauschen,
**dadurch gekennzeichnet, dass** sie einen Wärmespeicherbehälter (30) umfasst, der mit dem ersten Kreislauf (12) parallel zu dem gemeinsamen Wärmetauscher (28) verbunden ist und mit dem zweiten Kreislauf (22) parallel zu dem gemeinsamen Wärmetauscher (28) verbunden ist.

2. Klimatisierungsvorrichtung (10) nach Anspruch 1, wobei der erste Kreislauf (12) mindestens ein erstes Ventil (32A, 32B) für die selektive Verbindung des ersten Wärmetauschers (14) mit dem gemeinsamen Wärmetauscher (28), dem Speicherbehälter (30) oder keinem von dem gemeinsamen Wärmetauscher (28) und dem Speicherbehälter (30) umfasst.

3. Klimatisierungsvorrichtung (10) nach Anspruch 1 oder 2, wobei der zweite Kreislauf (22) mindestens ein zweites Ventil (36A, 36B) für die selektive Verbindung des gemeinsamen Wärmetauschers (28) oder des Speicherbehälters (30) mit dem zweiten Wärmetauscher (24) umfasst.

4. Klimatisierungsvorrichtung (10) nach einem der vorherigen Ansprüche, wobei der erste Kreislauf (12) Folgendes umfasst:
- einen ersten Zweig (42), der mit dem ersten Wärmetauscher (14) verbunden ist,
- einen zweiten Zweig (44), der sich zwischen dem ersten Wärmetauscher (14) und der Expansionsvorrichtung (20) erstreckt,
- einen dritten Zweig (46), der sich zwischen der Expansionsvorrichtung (20) und dem gemeinsamen Wärmetauscher (18) erstreckt,
- einen vierten Zweig (48), der mit dem gemeinsamen Wärmetauscher (18) verbunden ist,
- einen Kompressorzweig (50), auf dem der Kompressor (16) angeordnet ist und der sich zwischen einem Einlassabschnitt (50A) und einem Auslassabschnitt (50B) erstreckt, und
- eine Umkehrvorrichtung (40), die geeignet ist, um abwechselnd den Einlassabschnitt (50A) mit dem ersten Zweig (42) und den Auslassabschnitt (50B) mit dem vierten Zweig (48) oder den Einlassabschnitt (50A) mit dem vierten Zweig (48) und den Auslassabschnitt (50B) mit dem ersten Zweig (42) zu verbinden.

5. Klimatisierungsvorrichtung (10) nach Anspruch 4, wobei die Expansionsvorrichtung (20) ein erstes (54) und ein zweites (58) Expansionsventil umfasst, die jeweils von einem jeweiligen ersten und zweiten Expansionszweig getragen werden, wie beispielsweise:
- das erste Expansionsventil (54) weist einen Einlass auf, der mit dem zweiten Zweig (44) verbunden ist, und einen Auslass, der mit dem dritten Zweig (46) verbunden ist,
- das zweite Expansionsventil (56) weist einen mit dem dritten Zweig (46) verbundenen Einlass und einen mit dem zweiten Zweig (44) verbundenen Auslass auf, und
- jeder Expansionszweig (36, 40) weist ein Rückschlagventil (55, 57) auf, das in Reihe mit dem entsprechenden ersten (54) oder zweiten (56) Expansionsventil angeordnet ist und in die gleiche Richtung wie dieses entsprechende erste (54) oder zweite (56) Expansionsventil ausgerichtet ist.

6. Klimatisierungsvorrichtung (10) nach einem der vorherigen Ansprüche, wobei der zweite Kreislauf (22) einen Behälter (25) für Wärmeträgerfluid umfasst.

7. Verfahren zum Kühlen von mindestens eines Abteils (11), mittels einer Klimatisierungsvorrichtung (10) nach einem der vorherigen Ansprüche, die Klimatisierungsvorrichtung (10) umfassend:
- mindestens ein erstes Ventil (32A, 32B) in dem ersten Kreislauf (12) zum selektiven Verbinden des ersten Wärmetauschers (14) mit dem gemeinsamen Wärmetauscher (28), dem Speicherbehälter (30) oder keinem von dem gemeinsamen Wärmetauscher (28) und dem Speicherbehälter (30), und
- mindestens ein zweites Ventil (36A, 36B) in dem zweiten Kreislauf für die selektive Verbindung des gemeinsamen Wärmetauschers (28) oder des Speicherbehälters (30) mit dem zweiten Wärmetauscher (24),
**dadurch gekennzeichnet, dass** es einen Schritt umfasst, in dessen Verlauf die Klimatisierungsvorrichtung (10) eine Konfiguration zur Verwendung von gespeicherter Kälte annimmt, wobei:
- jedes erste Ventil (32A, 32B) geschlossen ist, um den ersten Wärmetauscher (14) von dem gemeinsamen Wärmetauscher (28) und dem Speicherbehälter (30) zu trennen, und
- das mindestens eine zweite Ventil (36A, 36B) den zweiten Wärmetauscher (24) des zweiten Kreislaufs (22) mit dem Speicherbehälter (30) verbindet.

8. Kühlverfahren nach Anspruch 7, umfassend einen Schritt, in dessen Verlauf die Klimatisierungsvorrichtung (10) eine Soll-Kühlkonfiguration annimmt, wobei:
- das mindestens eine erste Ventil (32A, 32B) den ersten Wärmetauscher (14) mit dem gemeinsamen Wärmetauscher (28) verbindet, und
- das mindestens eine zweite Ventil (36A, 36B) den zweiten Wärmetauscher (24) mit dem gemeinsamen Wärmetauscher (28) verbindet.

9. Kühlverfahren nach Anspruch 7 oder 8, umfassend einen Schritt, in dessen Verlauf die Klimatisierungsvorrichtung (10) eine Kältespeicherkonfiguration annimmt, wobei:
- das mindestens eine erste Ventil (32A, 32B) den ersten Wärmetauscher (14) mit dem Speicherbehälter (30) verbindet, und
- das mindestens eine zweite Ventil (36A, 36B) den zweiten Wärmetauscher (24) mit dem gemeinsamen Wärmetauscher (28) verbindet.

10. Verfahren zum Kühlen eines Abteils (11) eines Schienenfahrzeugs nach den Ansprüchen 8 und 9 in Kombination, wobei:
- wenn das Schienenfahrzeug außerhalb eines geschlossenen Raums fährt, die Klimaanlage (10) die Kältespeicherkonfiguration oder die Soll-Kühlkonfiguration annimmt, und
- wenn das Schienenfahrzeug in einem geschlossenen Raum fährt, die Klimaanlage (10) die Konfiguration zur Verwendung von gespeicherter Kälte annimmt.

## Claims

1. An air conditioning device (10) for a compartment (11), in particular of a railway vehicle, of the type comprising a first heat pump circuit (12) in which a refrigerant circulates, the first circuit comprising a first heat exchanger (14) for exchanging heat with the outside air, a compressor (16) and an expansion device (20), the air conditioning device (10) comprising:
- a second circuit (22), in which a heat transfer fluid circulates, comprising a second heat exchanger (24) with air from the compartment (11),
- a common heat exchanger (28), through which the first circuit (12) and the second circuit (22) pass, suitable to exchange heat between the refrigerant and the heat transfer fluid,
**characterised in that** it comprises a thermal storage tank (30), connected to the first circuit (12) in parallel to the common heat exchanger (28), and connected to the second circuit (22) in parallel to the common heat exchanger (28).

2. The air conditioning device (10) according to claim 1, wherein the first circuit (12) comprises at least one first valve (32A, 32B) for selectively connecting the first heat exchanger (14) with the common heat exchanger (28), the storage tank (30) or neither the common heat exchanger (28) nor the storage tank (30).

3. The air conditioning device (10) according to claim 1 or 2, wherein the second circuit (22) comprises at least one second valve (36A, 36B) for selectively connecting the common heat exchanger (28) or the storage tank (30) to the second heat exchanger (24).

4. The air conditioning device (10) according to any one of the preceding claims, wherein the first circuit (12) comprises:
- a first branch (42), connected to the first heat exchanger (14),
- a second branch (44), extending between the first heat exchanger (14) and the expansion device (20),
- a third branch (46), extending between the expansion device (20) and the common heat exchanger (18),
- a fourth branch (48), connected to the common heat exchanger (18),
- a compressor branch (50), on which the compressor (16) is arranged, and extending between an inlet portion (50A) and an outlet portion (50B), and
- a reversing device (40), suitable for alternatively connecting said inlet portion (50A) to the first branch (42) and said outlet portion (50B) to the fourth branch (48), or said inlet portion (50A) to the fourth branch (48) and said outlet portion (50B) to the first branch (42).

5. The air conditioning device (10) according to claim 4, wherein the expansion device (20) comprises a first (54) and a second (58) expansion valve, each carried by a respective first and second expansion valve branch, such as:
- the first expansion valve (54), has an inlet connected to said second branch (44), and an outlet connected to said third branch (46),
- the second expansion valve (56), has an inlet connected to said third branch (46), and an outlet connected to said second branch (44), and
- each expansion valve branch (36, 40) has a non-return valve (55, 57), arranged in series with the corresponding first (54) or second (56) expansion valve, and oriented in the same direction as this corresponding first (54) or second (56) expansion valve.

6. The air conditioning device (10) according to any one of the preceding claims, wherein the second circuit (22) comprises a heat transfer fluid tank (25).

7. A method of cooling at least one compartment (11), by means of an air conditioning device (10) according to any one of the preceding claims, the air conditioning device (10) comprising:
- at least one first valve (32A, 32B), in the first circuit (12), for selectively connecting the first heat exchanger (14) with the common heat exchanger (28), the storage tank (30) or neither the common heat exchanger (28) nor the storage tank (30), and
- at least one second valve (36A, 36B), in the second circuit, for selectively connecting the common heat exchanger (28) or the storage tank (30) with the second heat exchanger (24),
**characterised in that** it comprises a step in which the air conditioning device (10) assumes a stored cold usage configuration, in which:
- each first valve (32A, 32B) is closed to disconnect the first heat exchanger (14) from the common heat exchanger (28) and from the storage tank (30), and
- the at least one second valve (36A, 36B) connects the second heat exchanger (24) of the second circuit (22) to the storage tank (30).

8. The cooling method according to claim 7, comprising a step in which the air-conditioning device (10) assumes a nominal cooling configuration, wherein:
- the at least one first valve (32A, 32B) connects the first heat exchanger (14) to the common heat exchanger (28), and
- the at least one second valve (36A, 36B) connects the second heat exchanger (24) to the common heat exchanger (28).

9. The cooling method according to claim 7, comprising a step in which the air-conditioning device (10) assumes a cold-storing configuration, wherein:
- the at least one first valve (32A, 32B) connects the first heat exchanger (14) to the storage tank (30), and
- the at least one second valve (36A, 36B) connects the second heat exchanger (24) to the common heat exchanger (28).

10. The method of cooling a railway vehicle compartment (11), according to claims 8 and 9 taken in combination, wherein:
- when the railway vehicle is travelling outside a confined space, the air conditioning device (10) assumes the cold-storing configuration or the nominal cooling configuration, and
- when the railway vehicle is travelling in a confined space, the air conditioning device (10) assumes the stored cold usage configuration.
